# EUROPEAN PATENT APPLICATION

(11) **EP 3 046 057 A1**
(43) Date of publication of application: **20.07.2016**
(21) Application number: 16151733.9
(22) Date of filing: 18.01.2016
(51) Int. Cl.: G06Q 10/00, G06Q 30/00

(54) **DEVICE AND METHOD FOR ADAPTIVE CYCLE COUNTING**

(30) Priority: 19.01.2015 US 201562105065 P
(71) Applicant: Checkpoint Systems, Inc., Thorofare, NJ 08086 (US)
(72) Inventor: MORROW, Philip Word, ROCKPORT, MA Massachusetts 01966 (US); CHANDERSHAKER, Ghali Venkata Sarath, LEXINGTON, MA Massachusetts 02421 (US); NACHIMUTHU, Palaniappan, 560066 BANGALORE (IN)
(74) Representative: Studio Torta S.p.A.

(57) **Abstract**

A system may include a plurality of wireless communication tags associated with corresponding items at a location, a counting device configured to communicate with the tags to perform a counting operation associated with inventory information related to the items, and a count controller operably coupled to the counting device. The count controller may receive information indicative of count cycle frequency factors and may be configured to determine a count cycle frequency to be employed at the counting device. The count controller may receive updated count cycle frequency factors. The count cycle frequency may be updated based on the updated count cycle frequency factors.

## Description

### TECHNICAL FIELD

Various example embodiments relate generally to retail product inventory and devices and methods for simplifying and/or improving inventory processes.

### BACKGROUND

It is important for retailers to have accurate inventory information regarding products (or items) in their stores so that they can take actions to ensure that they have the correct number of items available to sell to customers. In some cases, it is also important for retail stores to have accurate inventory within various specific locations in their stores. For example, an accurate total store inventory may be used to determine when items should be ordered from sources external to the store (e.g., from distribution centers, direct from vendors, or from third party logistic providers, etc.). Within the store, an accurate inventory in a selling floor location may be used to determine when items should be moved from a backroom to the selling floor location so that the items are available for customers to purchase.

Retailers typically count items within various store locations to establish accurate inventory at a point in time. The retailers then track items exiting and entering the store location to keep a current idea of their inventory relative to the known value when the full count was conducted. However, inventory errors tend to accumulate over time due to multiple factors that introduce such errors. These factors may include, for example, theft, errors in correctly identifying items entering and leaving the location, errors in correctly counting items entering and leaving the location, etc. Accordingly, inventory accuracy decreases over time.

New technologies may allow counting to be accomplished more frequently. However, even if the ability to conduct counting operations is improved, it may still be difficult to determine the optimal frequency at which to conduct such counting operations.

### BRIEF SUMMARY OF SOME EXAMPLES

Accordingly, some example embodiments may provide systems, devices and/or methods for improving the efficiency and accuracy of conducting inventory counting operations.

In one example embodiment, a system for inventory counting is provided. The system may include a plurality of wireless communication tags associated with corresponding items (e.g., retail items) at a location, a counting device configured to communicate with the tags to perform a counting operation associated with inventory information related to the retail items, and a count controller operably coupled to the counting device. The count controller may receive information indicative of count cycle frequency factors and may be configured to determine a count cycle frequency to be employed at the counting device. The count controller may receive updated count cycle frequency factors. The count cycle frequency may be updated based on the updated count cycle frequency factors.

According to another example embodiment, a count controller of a wireless inventory counting system is provided. The count controller may be operably coupled with a counting device configured to communicate with tags on items to perform a counting operation associated with the items. The count controller may include processing circuitry configured to receive information indicative of count cycle frequency factors, determine a count cycle frequency to be employed at the counting device, receive updated count cycle frequency factors, and update the count cycle frequency based on the updated count cycle frequency factors.

According to still another example embodiment, a method of determining a count cycle frequency is provided. The method may include receiving information indicative of count cycle frequency factors, determining a count cycle frequency to be employed at the counting device, receiving updated count cycle frequency factors, and updating the count cycle frequency based on the updated count cycle frequency factors.

### BRIEF DESCRIPTION OF THE SEVERAL VIEWS OF THE DRAWING(S)

Having thus described the some example emboidments in general terms, reference will now be made to the accompanying drawings, which are not necessarily drawn to scale, and wherein:
FIG. 1 illustrates a graph of inventory accuracy versus time to contrast the accuracy of uncorrected inventory versus inventory corrected with cycle counts provided in accordance with an example embodiment;
FIG. 2 illustrates a block diagram of a basic system architecture for providing adaptive cycle counting in accordance with an example embodiment;
FIG. 3 illustrates a block diagram of a count controller for providing adaptive cycle counting in accordance with an example embodiment;
FIG. 4 illustrates an architecture of the system in which fixed counting devices are employed in accordance with an example embodiment;
FIG. 5 illustrates an architecture of the system in which mobile/handheld counting devices are employed in accordance with an example embodiment; and
FIG. 6 illustrates a block diagram of a method of adaptive cycle count frequency determination in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, "operable coupling" should be understood to relate to direct or indirect connection that, in either case, enables functional interconnection of components that are "operably coupled" to each other.

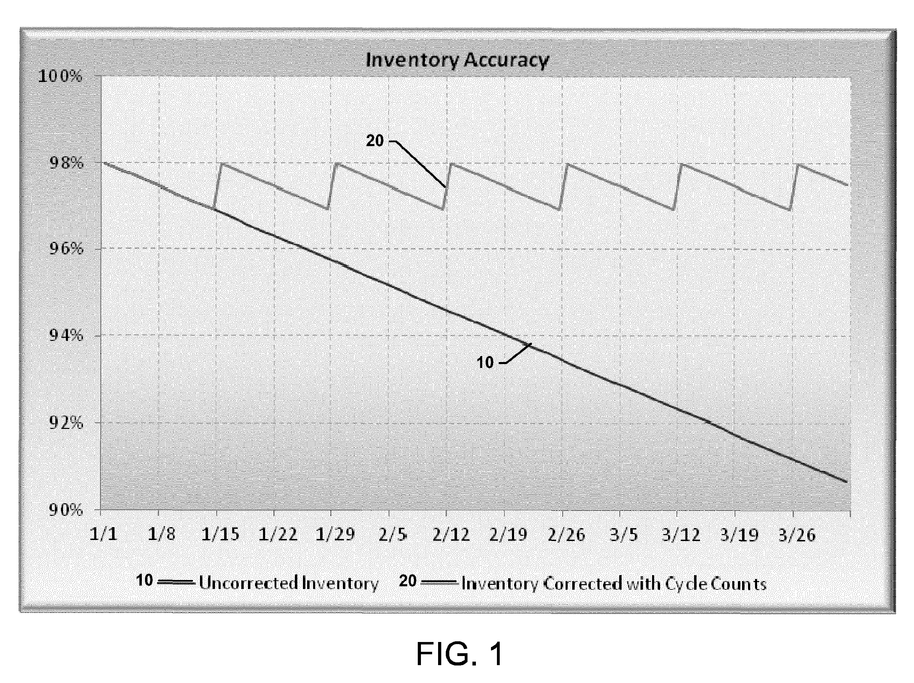

As indicated above, inventory accuracy typically decreases with time. FIG. 1 illustrates a curve of inventory accuracy to illustrate this point. To have the most accurate inventory information, the retailer knows that a current inventory count is required. However, particularly for manual counting operations, the effort and cost associated with providing an inventory count can be prohibitive. Accordingly, many retailers only invest the time and energy into conduct of a full inventory count once per year.

Once an inventory count is performed, the inventory is expected to closely match the inventory count with any error likely being attributable to the accuracy of the count itself. In the example of FIG. 1, count accuracy is assumed to be 98%. Thus, immediately after the inventory count is performed (on January 1^{st}), the inventory accuracy is 98%. Thereafter, the inventory accuracy will decrease due, for example, to the factors discussed above and perhaps other factors as well. One may assume that the factors that impact accuracy remain constant over time and, if so, count accuracy steadily and relatively declines as time passes as shown by curve 10. If greater accuracy is required (or desired) for some reason, an inventory count could be performed more frequently. For example, if an inventory count was performed every two weeks, the curve 20 may be more indicative of the inventory accuracy achievable. However, a manual count of this type and with this frequency may be unrealistic to achieve.

By attaching wireless communication tags (e.g., radio frequency identification (RFID) or other relatively short range communication tags) on items, a count may be achievable with greater frequency using fewer resources. In the case of items having RFID tags disposed thereon, a handheld communication device (e.g., equipped with an RFID reader) may be moved into an area within, for example, 5-30 feet of a group of items, and the device may be enabled to perform accurate counting rates of, for example, 20,000 items per hour. Suddenly, the frequency shown in curve 20 seems more achievable and, in fact, a number of retailers have turned to the provision of RFID or other relatively short range communication tags on their retail items so that handheld communication devices such as the RFID reader mentioned above and other reader devices may be used to perform counts more frequently and improve inventory accuracy.

However, counting too frequently may end up being an inefficient use of labor, and counting too infrequently may cause low inventory accuracy and possibly also corresponding loss of sales. Moreover, the factors that impact inventory accuracy may, in fact, not be constant over time. While inventory accuracy certainly may have a temporal component, many of the other factors that impact inventory accuracy may occur with other predictable characteristics. Thus, simply selecting an arbitrary time-based counting frequency may be neither necessary nor advantageous.

Some example embodiments may enable provision of systems and methods for monitoring the state of the retail environment to dynamically and adaptively calculate an optimal time to cycle count for each location, type of product, or other distinguishing characteristics of items rather than setting a fixed frequency. An adaptively calculated cycle counting task may be executed automatically or notification of an instruction to perform such cycle counting may be automatically provided to devices and/or people that can perform the actual cycle counting. Store associates can select the task for which they have received notification and start performing the count or monitor the results of an automatically conducted count.

Cycle count tasks may be directed and/or conducted for an entire store, a subset of locations within a store, for all tagged products, for a subset of tagged products, or any combination thereof. Accordingly, the efficiency and accuracy of inventory information may be greatly improved and sales losses associated with inaccurate inventory information can be avoided.

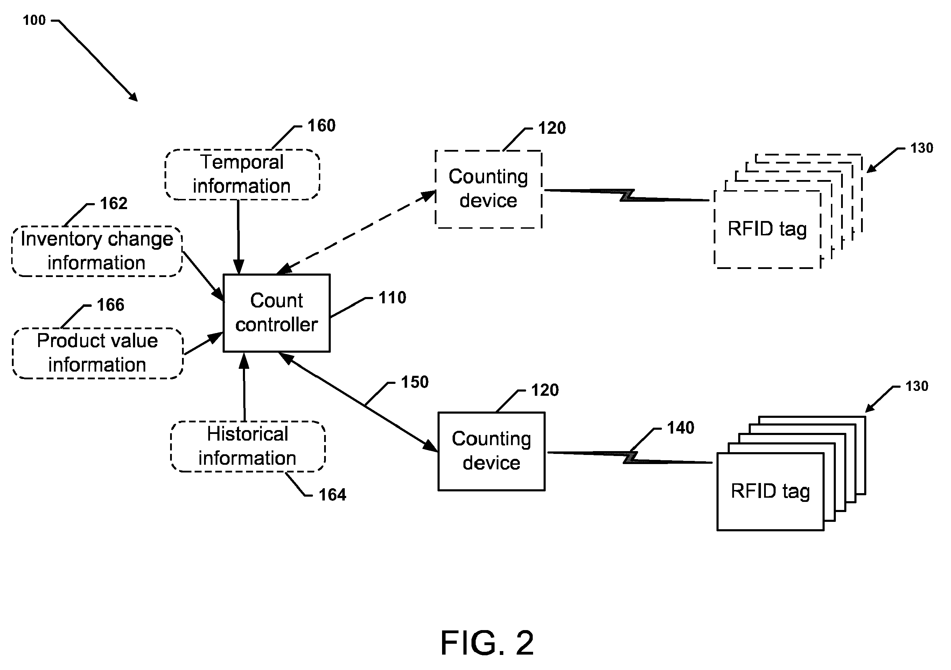

A number of different system architectures could be used to conduct inventory counting in accordance with some example embodiments. Several of these system architectures will be described below to illustrate some examples. However, each of the system architectures may nevertheless be provided with a few basic components that are illustrated by the block diagram of FIG. 2. In this regard, as shown in FIG. 2, an example system 100 may include a count controller 110 configured to receive information useable for dynamic and/or adaptive cycle counting ( or count cycle frequency factors) and determine a count cycle frequency based on such information. The count cycle frequency factors may be received dynamically, responsive to specific events, and/or may be pre-programmed into the count controller 110. In some cases, at least some of the count cycle frequency factors may be provided to the count controller 110 from a counting device 120 that is used to actually perform counting activities.

The counting device 120 may be configured to communicate wirelessly with a wireless communication tag (e.g., an RFID tag) that is attached to or otherwise provided in association with a particular item. As shown in FIG. 2, the counting device 120 may be capable of conducting wireless communication with a plurality of RFID tags 130. An association between the RFID tags 130 and the corresponding products or items with which they are associated may be stored in a location accessible to the count controller 110 or counting device 120, or may be communicated to the counting device 120 when communications are conducted between the counting device 120 and the RFID tags 130.

The counting device 120 may be a single device configured to perform counting activities within the system 100, or may be one of a plurality of counting devices. Accordingly, since the system 100 may include at least one, but possibly one or more counting devices 120, one counting device 120 is shown in solid lines and another counting device 120 is shown in dashed lines to illustrate the optional potential for multiplicity of the counting devices 120.

As shown in FIG. 2, the counting device 120 may wirelessly communicate with the RFID tags 130 via a first communication link 140. Thus, for example, when RFID tags 130 embody the tags of the system 100, near field communication (NFC) may be the form of wireless communication employed between the counting device 120 and the RFID tags 130 (i.e., as the first communication link 140). However, industrial, scientific and medical (ISM) band, ultra-wide band (UWB) or any other short range communication frequencies associated with RFID or other tag communication technologies may alternatively be employed. As such, the counting device 120 may employ an RFID reader or other reading device to read or otherwise communicate with the RFID tags 130. The RFID reader or other reading device may be controlled by on-board processing circuitry that controls operation of the counting device 120 and may also control communication of information read by the counting device 120 to other devices (e.g., to the count controller 110). As such, in various alternative embodiments of the system 100, a number of different wireless communication technologies between tags and the counting device 120 may be employed to form the first communication link 140. As additional examples, the wireless communication technologies may employ Bluetooth, WiFi or other short range communication technologies, or various proprietary communication technologies.

The counting device 120 may be a fixed device, a mobile device or a handheld device that is transported, for example, by store personnel. In some cases, combinations of the aforementioned devices may be employed within the same system. When fixed devices are employed, fixed counting devices may be strategically located in various locations and may be capable of communication with any tags within their range. As such, systems employing fixed devices may space the fixed devices apart in a strategic manner to ensure proper coverage of any desired area. When mobile or handheld devices are employed, a vehicle, robot or person may transport the counting device 120 about a location to read tags within range at the location. In some cases, a change in orientation and/or location of the counting device 120 may enhance reading accuracy of the tag reading process (and therefore enhance count accuracy). Thus, movement or orientation changes may be followed by additional read attempts in a given location to enhance counting accuracy.

In an example embodiment, a second communication link 150 may be established between the counting device 120 and the count controller 110. When fixed devices are employed for the counting device 120, the second communication link 150 may conveniently be provided via a wired connection. However, a wireless communication link (e.g., Bluetooth, WiFi, and/or the like) could alternatively embody the second communication link 150, if desired.

When mobile or handheld devices are employed, any wired connection may be embodied in the form of a wired connection between the count controller 110 and a charge station, docking station, or the like of the counting device 120. Thus, for example, the counting device 120 may be stored, housed or otherwise generally located at its charge station or docking station when not in use or after use. Contacts may be provided on the charge station or docking station to permit communication of data from the counting device 120 to communication ports operably coupling the charge station or docking station to the count controller 110 via the wired connection. However, in other cases, the charge station or docking station (or the counting device 120 itself) for mobile or handheld versions of the counting device 120 may establish the second communication link 150 as a wireless communication link similar to the manner described above for fixed devices.

In some example embodiments, the count controller 110 may be embodied at the counting device 120 or at the charge station or docking station of the counting device 120. Thus, for example, processing circuitry of the counting device 120 may also be shared by the count controller 110. In such example, the second communication link 150 may either not exist, or may be an internal communication link.

Regardless of how the first and second communication links 140 and 150 are embodied, the general operation of the system may involve the provision of an instruction from the count controller 110 or by the initiative of an operator to perform an inventory count operation. The counting device 120 (or devices) may then interact with the RFID tags 130 to obtain a count of products or items to which the RFID tags 130 are attached. Count data may be generated by the counting device 120 and the count data may be indicative of the inventory count. The count data may be communicated to the count controller 110, and may be provided to the operator and/or stored for future consumption or use in the generation of reports or for adaptive cycle count determinations aimed at providing a count cycle frequency that is optimized relative to a location or product. As such, the completed inventory count may represent historical data that is part of the count cycle frequency factors used by the count controller 110 to determine the count cycle frequency.

Other information is also employed as count cycle frequency factors relative to determining the count cycle frequency. For example, the count controller 110 may also employ temporal information 160 (e.g., time since the last count cycle), inventory change information 162 (e.g., inventory turnover, items sold, items received into inventory, items replenished from a stock room to a sales location, items detected at a point of exit and potentially stolen, etc.), historical information 164, product information 166, and/or the like as count cycle frequency factors used to generate the count cycle frequency. Based on all of the count cycle frequency factors, the count controller 110 may then determine the count cycle frequency that can be used relative to the last time an inventory count has been completed to provide a notification or instruction for execution of a next inventory count. Because of the number and variability of the count cycle frequency factors, the count cycle frequency is therefore a dynamic and adaptive value that ensures that a monolithic and unchanging or arbitrary count cycle frequency is not used. Rather, the count cycle frequency is actually intelligently determined to maximize or otherwise improve system efficiency relative to the maintenance of accurate product inventory information.

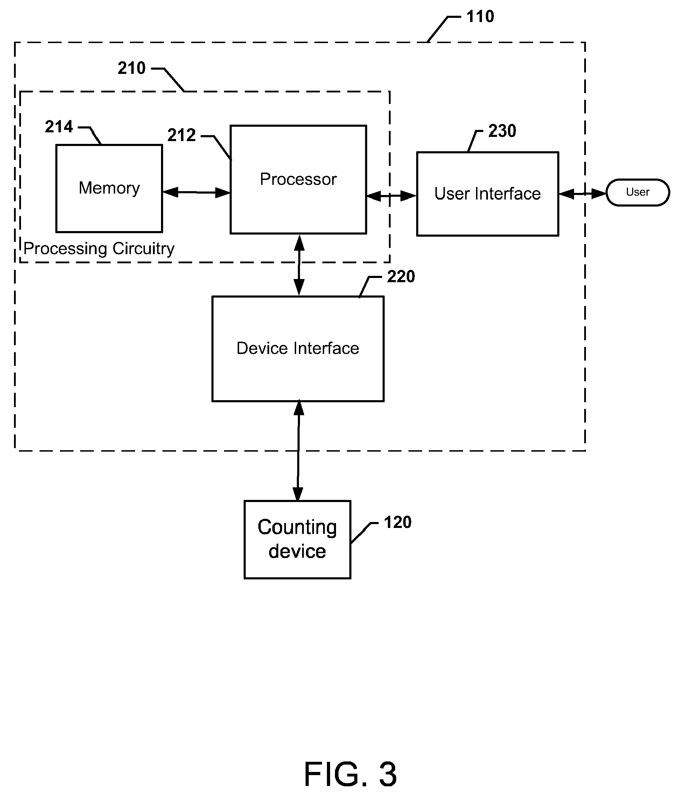

FIG. 3 illustrates a block diagram of the counting device 110 of an example embodiment. As shown in FIG. 3, the counting device 110 may include processing circuitry 210 of an example embodiment as described herein. In this regard, for example, the counting device 110 may utilize the processing circuitry 210 to provide electronic control inputs to one or more functional units of the counting device 110 to obtain and/or process data associated with the one or more functional units and perform the subsequent count cycle frequency determination processes described herein.

In some embodiments, the processing circuitry 210 may be embodied as a chip or chip set. In other words, the processing circuitry 210 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The processing circuitry 210 may therefore, in some cases, be configured to implement an embodiment of the present invention on a single chip or as a single "system on a chip." As such, in some cases, a chip or chipset may constitute means for performing one or more operations for providing the functionalities described herein.

In an example embodiment, the processing circuitry 210 may include one or more instances of a processor 212 and memory 214 that may be in communication with or otherwise control a device interface 220 and, in some cases, a user interface 230. As such, the processing circuitry 210 may be embodied as a circuit chip (e.g., an integrated circuit chip) configured (e.g., with hardware or a combination of hardware and software) to perform operations described herein. Thus, in some embodiments, the processing circuitry 210 may be embodied as a portion of an on-board computer of the counting device 110.

The user interface 230 may be in communication with the processing circuitry 210 to receive an indication of a user input at the user interface 230 and/or to provide an audible, visual, tactile or other output to the user. As such, the user interface 230 may include, for example, a display, one or more switches, buttons or keys (e.g., a keyboard or other function buttons), a mouse, and/or other input/output mechanisms. In an example embodiment, the user interface 230 may include one or a plurality of lights, a display, a speaker, a microphone, and/or the like.

The device interface 220 may include one or more interface mechanisms for enabling communication with other devices (e.g., the counting device 120, external communication network devices, etc.). In some cases, the device interface 220 may be any means such as a device or circuitry embodied in either hardware, or a combination of hardware and software that is configured to receive and/or transmit data from/to devices or components in communication with the processing circuitry 210 via internal and/or external communication mechanisms. In some cases, the device interface 220 may further include wired and/or wireless communication equipment (e.g., one or more antennas) for at least communicating with the counting device 120 and/or servers or computers of a network such as the Internet. As such, in some cases, the device interface 220 may enable the count controller 110 to communicate with other devices "in the cloud." However, in some cases, the count controller 110 may actually be a cloud component and the device interface 220 may allow the count controller 110 to communicate with the counting device from the cloud in such examples.

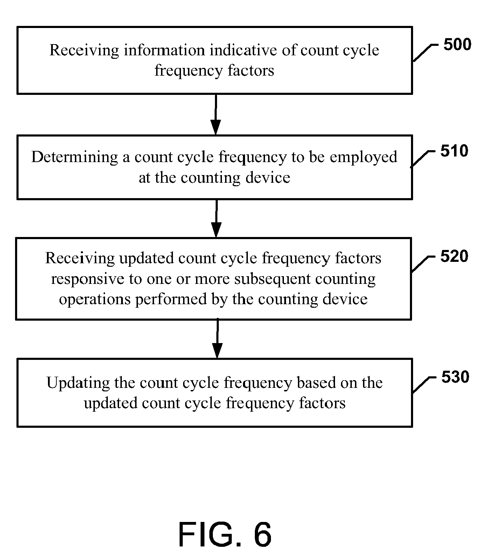

The processor 212 may be embodied in a number of different ways. For example, the processor 212 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. In an example embodiment, the processor 212 may be configured to execute instructions stored in the memory 214 or otherwise accessible to the processor 212. As such, whether configured by hardware or by a combination of hardware and software, the processor 212 may represent an entity (e.g., physically embodied in circuitry - in the form of processing circuitry 210) capable of performing operations according to embodiments of the present invention while configured accordingly. Thus, for example, when the processor 212 is embodied as an ASIC, FPGA or the like, the processor 212 may be specifically configured hardware for conducting the operations described herein. Alternatively, as another example, when the processor 212 is embodied as an executor of software instructions, the instructions may specifically configure the processor 212 to perform the operations described herein in reference to FIG. 6 below.

In an example embodiment, the processor 212 (or the processing circuitry 210) may be embodied as, include or otherwise control the operation of the count controller 110 based on inputs received by the processing circuitry 210. As such, in some embodiments, the processor 212 (or the processing circuitry 210) may be said to cause each of the operations described in connection with the count controller 110 in relation to operation of the count controller 110 relative to undertaking the corresponding functionalities associated therewith responsive to execution of instructions or algorithms configuring the processor 212 (or processing circuitry 210) accordingly.

In an example embodiment, the memory 214 may include one or more non-transitory memory devices such as, for example, volatile and/or non-volatile memory that may be either fixed or removable. The memory 214 may be configured to store information, data, applications, instructions or the like for enabling the processing circuitry 210 to carry out various functions in accordance with exemplary embodiments of the present invention. For example, the memory 214 could be configured to buffer input data for processing by the processor 212. Additionally or alternatively, the memory 214 could be configured to store instructions for execution by the processor 212. As yet another alternative or additional capability, the memory 214 may include one or more databases that may store a variety of data sets responsive to or to facilitate operation of the count controller 110. Among the contents of the memory 214, applications may be stored for execution by the processor 212 in order to carry out the functionality associated with each respective application. In some cases, the applications may include instructions for carrying out some or all of the operations described in reference to the algorithm of FIG. 6.

As mentioned above, the count controller 110 may be configured to determine a count cycle frequency based on the count cycle frequency factors. The count cycle frequency factors may be determinable or provided directly from the temporal information 160, inventory change information 162, historical information 164, and product information 166. In one example, the count cycle frequency may be determined as an optimal (and adaptive) interval between counting operations. In some cases, for practical purposes, the count cycle frequency may actually define a suggested time at which a next counting operation should occur relative to the last counting operation. As such, the count cycle frequency may dictate a continuously changing period between counting operations, the actual frequency of which may only technically be determined by averaging the periods over a given time. However, in some cases, the count cycle frequency may be a frequency value that applied for a given timeframe and all counting operations conducted within the given timeframe may be conducted in accordance with the frequency value defining the count cycle frequency.

In an example embodiment, the count controller 110 may be configured to determine the count cycle frequency as a value that is calculated between and/or relative to upper and lower boundary values that are defined by the operator. Thus, for example, the upper and lower boundary values may correspond to a maximum time allowable between counting operations and a minimum time allowable between counting operations, respectively. In some cases, the count controller 110 may default to the upper boundary value, the lower boundary value, a last calculated value between the upper and lower boundary values, a value half way between the upper and lower boundary values, or some other predetermined value that represents a start point from which the count cycle frequency is determined.

In an example embodiment, the count controller 110 may arrive at the count cycle frequency by modifying the start point based on any or all of the temporal information 160, inventory change information 162, historical information 164, and product information 166. Modifications may take the form of incremental increases or decreases from the start point dictated according to a count cycle frequency selection algorithm. The increases and decreases may be independently associated with each respective element of the count cycle frequency factors. Thus, for example, a first component associated with inventory change information may indicate an increase or decrease from the start point, and a second component associated with the historical information may indicate a separate increase or decrease independent of the first component. The count controller 110 may be configured to sum, average or otherwise account for each component and determine a final value, bounded by the upper and lower boundary values, for the count cycle frequency.

In an example embodiment, each one of the temporal information 160, inventory change information 162, historical information 164, and product information 166 (and perhaps other factors as well) may have one or more contributory components that may each be considered relative to determining the count cycle frequency. For example, temporal information 160 may include the maximum and minimum time allowable between counting operations, time since the last counting operation, average time between counting operations, season, date, or other time-related factors. The impact of the temporal information 160 on calculation of the count cycle frequency (other than setting the upper and lower boundary values) may tend toward triggering a count operation with increasing weight as the length of time since the last count operation was conducted. The increasing weight may be linear or non-linear dependent upon various things such as product value, or other temporal factors such as the current season or date. Weighting toward triggering another count operation may also begin to build based on distance from the average time between count operations. Thus, for example, if the average time between count operations is three weeks, the temporal information component may begin to add to a weighting factor for triggering a counting operation as the distance from the three week average increases, and also simply based on the time since the last operation also increasing.

The inventory change information 162 may include inventory turnover, items received, items sold, items replenished from stock, items potentially stolen (e.g., detected by a security gate at the store exit), items in the fitting room, misplaced items, ratio of backroom inventory to sales floor inventory and/or or the like. During times of significant flux in inventory such as when large sales volume has occurred (e.g., after a sale) or when a new shipment has recently arrived, the component associated with inventory change information 162 may begin to weigh toward triggering a counting operation. However, if inventory flux is not generally noted, the component associated with inventory change information 162 may be small and not contribute heavily toward triggering a counting operation.

The historical information 164 may include a history of errors for the cycle count task (e.g., standard deviation of expected versus counted items over the last x number of cycle counting tasks) or a history of errors by the user performing any cycle counting task. In some cases, the historical information 164 may include historical out of shelf incidence rate (i.e., how often a product that is in stock is not available on the sales floor), historical out of stock incidence rate, historical shrink rate, average shelf target, and/or the like. The historical information 164 may be used to identify trends or patterns so that a component associated with the historical information 164 may build in weighting toward triggering a counting operation when (regardless of current events) the patterns of historical activity would suggest that a counting operation would be timely. Thus, for example, if inventory count frequency has historically been high (or low) during specific times of the year, the component associated with the historical information 164 may lend weight toward keeping count frequency in line with historical trends.

The product information 166 may include price information for individual items, an average value of a plurality of items, and/or sales volume information. Accordingly, for higher value items, more accurate inventory counts may be desirable to ensure proper stock is maintained and/or to ensure that loss prevention activities can be more diligently undertaken. Additionally, for high volume sales items, where the type of item is such that the items sell in large surges, the component associated with product information 166 may build to lend weight toward conducting a counting operation more frequently for high value or high volume sales items.

In an example embodiment, an algorithm for determining the count cycle frequency may incorporate a component associated with each of the count cycle frequency factors into a calculation to determine whether or when to trigger, notify or request that a counting operation be conducted. In some cases, the algorithm may simply sum or average the components and the components may each have positive or negative values associated therewith. Positive values may add more time to the start point and negative values may subtract time from the start point. Thus, in a simple example, a cumulative count cycle frequency value (CCv) may be calculated based a temporal component (Ct), an inventory change component (CΔi), a historical component (Ch), and a product component (Cp) that correlate to the temporal information 160, inventory change information 162, historical information 164, and product information 166, respectively. In such an example, CCv = Ct + CΔi + Ch + Cp may be calculated, and the start point may be adjusted based on the magnitude and sign of the resulting CCv. However, if the CCv pushes the determined count cycle frequency to either the upper or lower boundary values, then the resulting count cycle frequency would be provided as the corresponding upper or lower boundary value.

In some cases, one or more of the components may also be weighted with weighting factors that may give more weight to one or more of the components. In a simple example, the total weight may be set to one and the weighting values are distributed in accordance with operator preference. Thus, for example, if the inventory change component is desired to be the dominant component, CCv may be calculated as: CCv = (0.2) Ct + (0.4) CΔi + (0.2) Ch + (0.2) Cp. The resulting CCv may then be applied (e.g., based on the magnitude and sign of the cumulative count cycle frequency value) to the start point to determine the count cycle frequency.

When the count controller 110 determines a count cycle frequency, the determined count cycle frequency may be provided to the counting device 120 (or an operator) to trigger or notify the counting device 120 (or operator) when the corresponding time for a new counting operation is reached. However, as an alternative, the count controller 110 may determine the count cycle frequency and maintain the value locally until the count cycle frequency determines that a new counting operation should be conducted. At the time the new counting operation should be conducted according to the count cycle frequency, the count controller 110 may trigger, notify or request that the counting operation should be conducted through communication with the counting device 120 (or the operator). Thus, for example, the count controller 110 may automatically trigger the counting device 120 to perform a counting operation (e.g., if the counting device 120 is fixed and can be triggered remotely) when the time for conducting the next counting operation is reached according to the count cycle frequency. If the counting device 120 is mobile (e.g., a handheld or a robot), the count controller 110 may provide a task request or notification to the counting device 120 or to the charge or docking station when the time for conducting the next counting operation is reached according to the count cycle frequency. In some cases, the count controller 110 may communicate the notification or request to a communication device of the operator (e.g., via email or text message). In still other examples, an audible and/or visible notification may be provided in the store itself (e.g., via intercom or public announcement, among other possible methods).

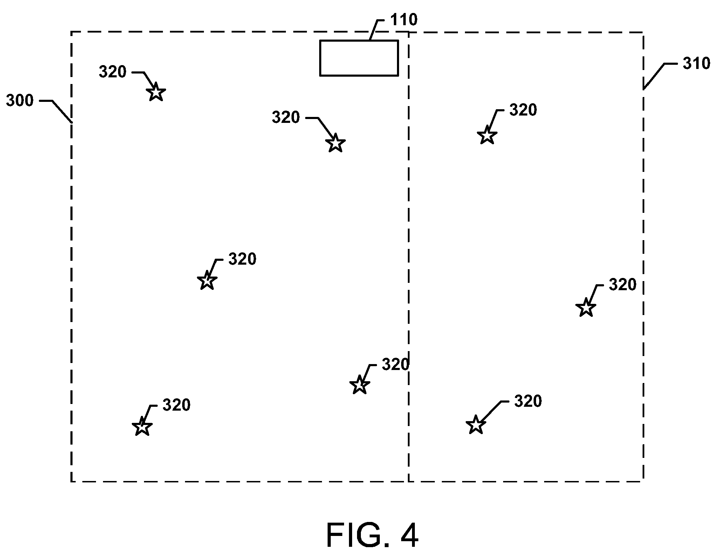

FIG. 4 illustrates a plan view of a more specific example in which fixed devices are employed as the counting devices. As shown in FIG. 4, the retail store may include a sales floor 300 and a stock room 310. A plurality of fixed counting devices 320 may also be disposed at various distributed locations throughout the store. The fixed counting devices 320 may be in communication with the count controller 110, which may be accessible to management or other store personnel acting as an operator. Tags (not shown) may be distributed at various locations in the store and may be counted responsive to insertion of a count instruction from the count controller 110 or from the operator. The count controller 110 may interact with the fixed counting devices 320 to track temporal and historical information, and interact with input information from other sources to receive inventory change and product information. The count controller 110 may then determine the count cycle frequency and issue notifications or otherwise trigger the fixed counting devices 320 when appropriate.

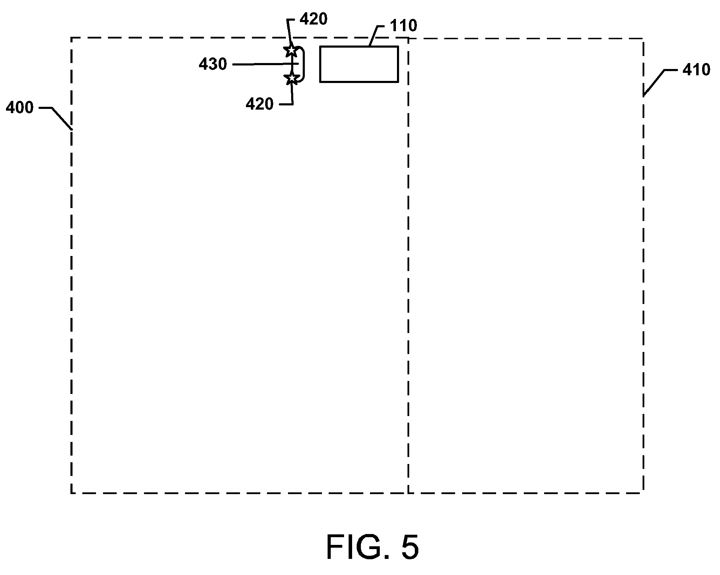

FIG. 5 illustrates a plan view of a more specific example in which mobile or handheld devices are employed as the counting devices. As shown in FIG. 5, the retail store may include a sales floor 400 and a stock room 410. The counting controller 110 may be located at some point in the store accessible to management or other store personnel acting as an operator. Either nearby or remotely located relative to the counting controller 110, one or more mobile/handheld counting devices 420 may be provided. When not in use, the mobile/handheld counting devices 420 may rest at a docking station or charge station 430. Tags (not shown) may be distributed at various locations in the store and may be counted by the mobile/handheld counting devices 420 responsive to receipt of a count instruction from the count controller 110. The operator may, responsive to receipt of such instruction, initiate a robot to conduct a counting operation with an integrated or handheld reader. The robot may then rove through the sales floor 400 and/or the stock room 410 to perform counting operations, or the operator may go to specified locations of the sales floor 400 and/or the stock room 410 to count tags at a given location or for given products. According to some example embodiments, a robot may be triggered to perform a count operation directly from a communication provided by the count controller 110.

In an example embodiment, the count controller 110 may therefore be configured to receive information indicative of count cycle frequency factors and determine a count cycle frequency that dictates or otherwise provides useful information regarding how often counting operations are performed. The count controller 110 may then provide instructions, notifications or requests associated with initiating the counting operation. Thus, from a technical perspective, the count controller 110 may be configured to perform a method according to an example embodiment. As an example, FIG. 6 is a flowchart of a method and program product according to an example embodiment. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a computing device and executed by a processor in the computing device. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, as shown in FIG. 6, a method of determining a count cycle frequency is provided. The method may include receiving information indicative of count cycle frequency factors at operation 500, determining a count cycle frequency to be employed at the counting device at operation 510, receiving updated count cycle frequency factors responsive to one or more subsequent counting operations performed by the counting device at operation 520, and updating the count cycle frequency based on the updated count cycle frequency factors at operation 530.

In some embodiments, the features described above may be augmented or modified, or additional features may be added. These augmentations, modifications and additions may be optional and may be provided in any combination. Thus, although some example modifications, augmentations and additions are listed below, it should be appreciated that any of the modifications, augmentations and additions could be implemented individually or in combination with one or more, or even all of the other modifications, augmentations and additions that are listed. As such, for example, the method may further include communicating a notification of the count cycle frequency to the counting device or to a device of an operator responsive to determination of the count cycle frequency. In some cases, the count cycle frequency factors may include a plurality of components including at least a first component associated with temporal information and a second component associated with at least one of inventory change information, historical information, or product information. In some embodiments, the first and second components are each assigned a corresponding weighting factor. In an example embodiment, a cumulative count cycle frequency value is determined based on the first and second components, and the count cycle frequency is determined based on adjusting a starting point defined between an upper boundary value and a lower boundary value by an amount based on the cumulative count cycle frequency value. In some cases, the count cycle frequency may be distinctly determined for different locations, products, or types or product (e.g., based on product value or sales volume).

Example embodiments may provide a communication system that allows inventory counts to be performed on an adaptive basis. Accordingly, inventory counts may be accomplished in a manner aimed at improving the efficiency of the system. To provide the adaptive inventory counting functionality, some example embodiments may calculate an initial count cycle frequency and then update it subsequent to information gained via one or more previous cycles. By enabling the system to more efficiently and effectively perform inventory counts, lost sales may be avoided since more effective inventory management can be employed.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A system comprising:
a plurality of wireless communication tags associated with corresponding items at a location;
a counting device configured to communicate with the tags to perform a counting operation associated with the items; and
a count controller operably coupled to the counting device, the count controller receiving information indicative of count cycle frequency factors and being configured to determine a count cycle frequency to be employed at the counting device,
wherein the count controller receives updated count cycle frequency factors, and wherein the count cycle frequency is updated based on the updated count cycle frequency factors.

2. The system of claim 1, wherein the counting device comprises a fixed device.

3. The system of claim 2, wherein the counting device automatically performs a plurality of subsequent counting operations at a frequency determined by the count cycle frequency.

4. The system of claim 1, wherein the counting device comprises a mobile device or a handheld device.

5. The system of claim 4, wherein the count controller communicates a notification of the count cycle frequency to the counting device responsive to determination of the count cycle frequency.

6. The system of claim 4, wherein the count controller communicates a notification of the count cycle frequency to a communication device of an operator responsive to determination of the count cycle frequency.

7. The system of claim 1, wherein the count cycle frequency factors comprise a plurality of components including at least a first component associated with temporal information and a second component associated with at least one of inventory change information, historical information, or product information.

8. The system of claim 7, wherein the first and second components are each assigned a corresponding weighting factor.

9. The system of claim 7, wherein a cumulative count cycle frequency value is determined based on the first and second components, and wherein the count cycle frequency is determined based on adjusting a starting point defined between an upper boundary value and a lower boundary value by an amount based on the cumulative count cycle frequency value.

10. The system of claim 1, wherein the count controller is configured to determine the count cycle frequency for the location or for a particular product type at the location.

11. A count controller of a wireless inventory counting system, the count controller being operably coupled with a counting device configured to communicate with tags on items to perform a counting operation associated with the items, the count controller comprising processing circuitry configured to:
receive information indicative of count cycle frequency factors;
determine a count cycle frequency to be employed at the counting device;
receive updated count cycle frequency factors; and
update the count cycle frequency based on the updated count cycle frequency factors.

12. The count controller of claim 11, wherein the processing circuitry is configured to communicate a notification of the count cycle frequency to the counting device responsive to determination of the count cycle frequency.

13. The count controller of claim 11, wherein the processing circuitry is configured to communicate a notification of the count cycle frequency to a communication device of an operator responsive to determination of the count cycle frequency.

14. The count controller of claim 11, wherein the count cycle frequency factors comprise a plurality of components including at least a first component associated with temporal information and a second component associated with at least one of inventory change information, historical information, or product information.

15. The count controller of claim 14, wherein the first and second components are each assigned a corresponding weighting factor.

16. The count controller of claim 14, wherein a cumulative count cycle frequency value is determined based on the first and second components, and wherein the count cycle frequency is determined based on adjusting a starting point defined between an upper boundary value and a lower boundary value by an amount based on the cumulative count cycle frequency value.

17. The count controller of claim 1, wherein the processing circuitry is configured to determine the count cycle frequency for a given location or for a particular product type.

18. A method comprising:
receiving information indicative of count cycle frequency factors;
determining a count cycle frequency to be employed at the counting device;
receiving updated count cycle frequency factors; and
updating the count cycle frequency based on the updated count cycle frequency factors.

19. The method of claim 18, further comprising communicating a notification of the count cycle frequency to the counting device responsive to determination of the count cycle frequency.

20. The method of claim 18, further comprising communicating a notification of the count cycle frequency to a communication device of an operator responsive to determination of the count cycle frequency.
